# EUROPÄISCHE PATENTSCHRIFT

(11) **EP 0 447 646 B1**
(45) Veröffentlichungstag und Bekanntmachung des Hinweises auf die Patenterteilung: **30.08.1995**
(21) Anmeldenummer: 90124328.7
(22) Anmeldetag: 15.12.1990
(51) Int. Cl.: G05B 13/00, F02D 41/38

(54) **Fehlerkorrigiertes Regelsystem**
Error-corrected control system
Système de réglage avec correction d'erreur

(30) Priorität: 17.03.1990 DE 4008669
(43) Veröffentlichungstag der Anmeldung: 25.09.1991
(73) Patentinhaber: ROBERT BOSCH GMBH, 70442 Stuttgart (DE)
(72) Erfinder: Wessel, Wolf, Ing. grad., W-7141 Oberriexingen (DE); Müller, Norbert, Dipl.-Ing., W-7146 Tamm (DE); Fenchel, Reinhard, Dipl.-Ing., W-7260 Calw-Altburg (DE); Birk, Manfred, Dipl.-Ing., W-7141 Oberriexingen (DE)

(56) Entgegenhaltungen:
- EP-A- 0 349 811
- DE-A- 3 202 614
- DE-A- 3 439 927
- US-A- 4 546 426
- US-A- 4 755 924
- US-A- 4 904 912

## Beschreibung

Die Erfindung betrifft ein Verfahren zum Betreiben eines Regelsystems, insbesondere für die Kraftstoffeinspritzung einer Brennkraftmaschine, bei dem beim Auftreten von Abweichungen eine Fehlerkorrektur erfolgt und bei dem parallel zu einem Regler ein Steuerglied als Vorsteuerung betrieben wird. Eine solche Einrichtung ist beispielsweise aus der US-A-3 758 762 bekannt.

Aus der DE-OS 32 02 614 ist eine Regeleinrichtung für den Spritzbeginn bei einer mit Selbstzündung arbeitenden Brennkraftmaschine bekannt. Die Regeleinrichtung weist einen PI-Regler auf, dem ein Zähler vorgeschaltet ist, der an einen die Kurbelwellenstellung der Brennkraftmaschine erfassenden Sensor angeschlossen ist. Der PI-Regler erhält einen Sollwert, der von einem Kennlinienfeld stammt, dem als Eingangsgrößen Betriebsparameter der Brennkraftmaschine zugeleitet werden. Ferner ist ein zweites Kennfeld, ein sogenanntes Steuerkennfeld, vorgesehen, dessen Ausgangswert zu dem Ausgangswert des PI-Reglers addiert wird. Im Fehlerfall wird der Ausgangswert des PI-Reglers abgeschaltet. Ein Fehlerfall liegt vor, wenn zum Beispiel der Sensor, der Zähler oder sonstige Komponenten der Regeleinrichtung nicht einwandfrei arbeiten.

### Vorteile der Erfindung

Das erfindungsgemäße Verfahren mit den im Hauptanspruch genannten Merkmalen hat demgegenüber den Vorteil, daß eine hohe Regelgenauigkeit und eine große Dynamik im gesteuerten und geregelten Fall vorliegt. Durch die Ermittlung eines ersten Abweichungssignals etwa in der Mitte des Regelbereichs und durch Gewinnung eines zweiten Abweichungssignals im Bereich eines der Anschlagpunkte (Endbereiche) des Regelbereichs ist in jedem Regler-Betriebspunkt eine Fehlerkorrektur möglich. Die Ermittlung der beiden Abweichungssignale zeigt auf, wie und in welchem Umfang die Fehlerkorrektur vorgenommen werden muß, so daß zum Beispiel Toleranzen der Komponenten und Bauteile ausgeglichen werden können.

Vorzugsweise ist als Regler ein PI-Regler eingesetzt.

Das erste Abweichungssignal repräsentiert einen additiven Fehler und das zweite Abweichungssignal einen multiplikativen Fehler. Insofern ist es vorteilhaft, wenn die dem additiven Fehler zugeordnete Abweichung additiv und die dem multiplikativen Fehler zugeordnete Abweichung multiplikativ in das Regelsystem zur Korrektur eingespeist werden.

Bei der Durchführung des Verfahrens wird das erste Abweichungssignal auf eine Summationsstelle am Ausgang der Vorsteuerung geführt. Insofern erfolgt eine additive Korrektur des Vorsteuerwerts.

Das zweite Abweichungssignal wird bevorzugt auf eine Multiplikationsstelle am Eingang einer Reglerstrecke des Regelsystem geführt.

Nach einer Weiterbildung der Erfindung ist vorgesehen, daß die zwischen den Anschlagpunkten des Regelkreises liegenden Abweichungs-Zwischenwerte entsprechend dem jeweils vorliegenden Regler-Betriebspunkt durch Interpolation, insbesondere lineare Interpolation, ermittelt und dem Regelsystem zugeführt werden. Mithin ermöglicht die Ermittlung des ersten und des zweiten Abweichungssignals in Zusammenhang mit einer Interpolation die Bereitstellung einer Fehlerkorrekturkennlinie, die die Bestimmung von Abweichungs-Zwischenwerten zuläßt, so daß jedem beliebigen Regler-Betriebspunkt eine individuelle Korrektur zuordbar ist.

Nach einer Weiterbildung der Erfindung ist vorgesehen, daß die Verstärkung der als P-Glied ausgebildeten Vorsteuerung der umgekehrten mittleren Streckenverstärkung entspricht. Bei einer mittleren Verstärkung ist der Integral-Anteil (I-Anteil) des PI-Reglers bei einer präzisen, das heißt, toleranzfreien Strecke, gleich "0". Da bei einer Serienfertigung jedoch auch stets toleranzbehaftete Komponenten zum Einsatz gelangen, wird die jeweilige Toleranz durch den PI-Regler ausgeglichen. Hierbei ist der I-Anteil ein Maß für die Toleranz.

Vorzugsweise erhält der PI-Regler als Eingangssignal das Ausgangssignal eines Summenpunkts, auf den mit positivem Vorzeichen ein Sollsignal und mit negativem Vorzeichen ein vom Ausgang der Reglerstrecke kommendes Istsignal geführt ist.

Handelt es sich bei dem Regelsystem um eine Einspritzanlage einer Brennkraftmaschine, so wird als Sollsignal ein Einspritzbeginn-Sollsignal und als Istsignal ein Einspritzbeginn-Istsignal verwendet.

Bei der Verfahrensführung wird derart vorgegangen, daß die Vorsteuerung als Eingangssignal das Sollsignal erhält.

Insbesondere ist vorgesehen, daß der Ausgang der Vorsteuerung und der Ausgang des PI-Reglers jeweils mit positivem Vorzeichen addiert werden (Summationsstelle 10, Summationspunkt 13). Der Ausgang des Summationspunkts führt zur Reglerstrecke, die bevorzugt von der Einspritzpumpe der Brennkraftmaschine gebildet sein kann. Alternativ kann die bereits erwähnte Summationsstelle, der das erste Abweichungssignal zugeführt wird, mit dem zuvor erwähnten Summationspunkt zusammengelegt werden, so daß dem dann neu entstehenden Additionspunkt als Eingangsgrößen die Ausgangswerte von Vorsteuerung und Regler sowie das erste Abweichungssignal zugeführt werden.

Das Istsignal wird über eine spritzsynchrone Abtastung auf den Summenpunkt am Eingang des Reglers zurückgeführt. Ferner liegt zwischen der Spritzbeginn-Sollwertzuführung und dem genannten Summenpunkt ebenfalls eine wie ein Schalter wirkende Abtastung, die synchron mit der zuvor erwähnten Abtastung schaltet. Jedesmal wenn das Spritzbeginnsignal ausgewertet wurde, erfolgen synchrone Abtastungen, wodurch die Regeldifferenz am Summenpunkt gebildet wird. Hierdurch wird der Regler aktiviert, der die entsprechende Berechnung vornimmt und die errechnete Größe an seinem Ausgang zur Verfügung stellt.

Schließlich stellt das Sollsignal ein Kennfeldwert dar, der aus Betriebsparametern der Brennkraftmaschine gebildet wird. Insofern kann unter der Vorsteuerung ebenfalls ein Kennfeld, nämlich ein Steuerkennfeld, verstanden werden, das durch das erste Abweichungssignal korrigiert wird.

### Zeichnung

Die Erfindung wird im folgenden anhand der Figuren näher erläutert. Es zeigen:
- Figur 1: ein Blockschaltbild eines Regelsystems und
- Figur 2: eine Kennlinie der Regelgröße der Anordnung der Figur 1.

### Beschreibung des Ausführungsbeispiels

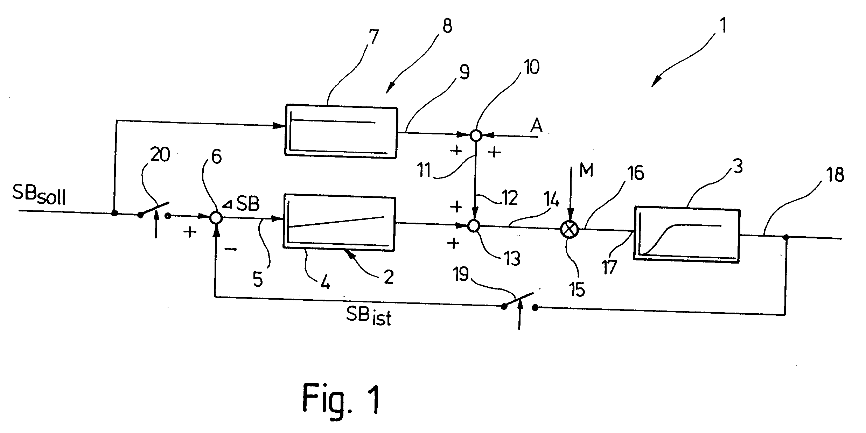

Die Figur 1 zeigt ein Regelsystem 1, das einen Regler 2 sowie eine Reglerstrecke 3 aufweist. Der Regler 2 ist vorzugsweise als PI-Regler 4 ausgebildet. Bei der Reglerstrecke 3 handelt es sich um die Einspritzpumpe einer nicht dargestellten Brennkraftmaschine. Insofern eignet sich das Regelsystem 1 um eine Anordnung für die Kraftstoffeinspritzung einer Brennkraftmaschine, vorzugsweise einer selbstzündenden Brennkraftmaschine, zu betreiben. Insbesondere kann die Anordnung zur Spritzbeginnregelung eingesetzt werden. Dies erfolgt -wie erwähnt- vorzugsweise bei selbstzündenden Brennkraftmaschinen, also Dieselmotoren.

Der Eingang 5 des Reglers 2 ist mit dem Ausgang eines Summenpunkts 6 verbunden. Dem Summenpunkt 6 wird als Eingangsgröße ein Sollsignal SBₛₒₗₗ zugeführt. Das Sollsignal SBₛₒₗₗ wird von einem nicht dargestellten Kennfeld geliefert, dem als Eingangsgrößen Betriebsparameter der Brennkraftmaschine zugeleitet werden. Als Betriebsparameter kommt beispielsweise u.a. die Drehzahl und die Einspritzmenge in Frage.

Das Sollsignal SBₛₒₗₗ wird ferner einem Steuerglied 7 zugeleitet, das eine Vorsteuerung 8 in dem Regelsystem 1 bildet und ein Proportionalverhalten (P-Glied) aufweist. Der Ausgang 9 des Steuerglieds 7 ist an eine Summationsstelle 10 mit positivem Vorzeichen angeschlossen. Dieser wird ferner ein erstes Abweichungssignal A zugeführt. Auf dieses Abweichungssignal A wird im nachfolgenden noch näher eingegangen.

Der Ausgang 11 der Summationsstelle 10 ist mit einem Eingang 12 eines Summationspunkts 13 verbunden, dem als weitere Eingangsgröße das Ausgangssignal des Reglers 2 zugeleitet wird. Diese beiden Eingangswerte werden dem Summationspunkt 13 mit positivem Vorzeichen zugeleitet. Der Ausgang 14 des Summationspunkts 13 führt als Eingangsgröße zu einer Multiplikationsstelle 15, die als weitere Eingangsgröße ein zweites Abweichungssignal M erhält. Auf dieses weitere Abweichungssignal M wird nachfolgend ebenfalls eingegangen. Der Ausgang 16 der Multiplikationsstelle 15 führt zum Eingang 17 der Reglerstrecke 3, an deren Ausgang 18 ein Istsignal SBᵢₛₜ zur Verfügung steht. Mithin liegt am Ausgang des Summenpunkts 6 eine Regeldifferenz △ SB an.

Der Ausgang 18 ist über eine spritzbeginnsynchrone Abtastung -die als Schalter 19 dargestellt ist- mit dem Summenpunkt 6 verbunden. Ferner wird der Sollwert SBₛₒₗₗ über eine weitere Abtastung -die als Schalter 20 dargestellt ist- an den Summenpunkt 6 gelegt. Die beiden Abtastungen arbeiten synchron zueinander. Dies bedeutet, daß jedesmal wenn das Spritzbeginnsignal ausgewertet wurde, die Abtastung vorgenommen wird, die man sich als Schließen der Schalter 19 und 20 denken kann, so daß am Summenpunkt 6 die Regeldifferenz vorliegt und der PI-Regler seine Berechnung vornehmen kann.

Da im Ausführungsbeispiel das Regelsystem zur Einstellung des Spritzbeginns der Kraftstoffeinspritzung einer Brennkraftmaschine herangezogen wird, handelt es sich bei dem Sollsignal SBₛₒₗₗ um ein Einspritzbeginn-Sollsignal und bei dem Istsignal SBᵢₛₜ um ein Einspritzbeginn-Istsignal.

In dem aufgezeigten Regelsystem zur Kraftstoffeinspritzung wird die Reglerstrecke 3 von einer der Brennkraftmaschine zugeordneten Einspritzpumpe gebildet. Die einzelnen Pumpen einer Baureihe unterliegen nicht vermeidbarer Toleranzen. Die Verhältnisse sind nun derart gewählt, daß bei einem nicht toleranzbehafteten Exemplar die Verstärkung der Vorsteuerung 8 der umgekehrten mittleren Streckenverstärkung der Reglerstrecke 3 entspricht. Bei einer mittleren Verstärkung weist der I-Anteil des PI-Reglers 4 unter der Annahme des toleranzfreien Exemplars den Wert "0" auf. Bei toleranzbehafteten Exemplaren wird die Toleranz durch den PI-Regler 4 ausgeglichen. Der I-Anteil ist ein Maß für die Toleranz.

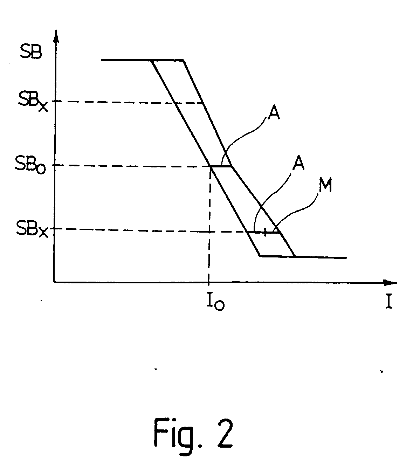

Im nachfolgenden soll auf eine die Toleranzen ausgleichende Fehlerkorrektur eingegangen werden. Hierzu sei die Figur 2 herangezogen, die auf der Ordinate eines kartesischen Koordinatensystems den Spritzbeginn SB in Abhängigkeit von einem am Ausgang 14 des Summationspunkts 13 auftretenden Signals I aufweist. Durch die erwähnten toleranzbehafteten Exemplare kommt es zu Abweichungen, die in einen additiven und in einen multiplikativen Fehler aufgespalten werden können. Hierzu ist gemäß Figur 2 ein Einstellpunkt (SB₀, I₀) anzufahren, der etwa in der Mitte des Regelbereichs liegt. Hierdurch ist das bereits erwähnte erste Abweichungssignal A bestimmbar. Um den multiplikativen Fehler zu ermitteln, wird eine Einstellung im Bereich eines der Anschlagpunkte (zum Beispiel SBₓ angefahren), wodurch sich eine Abweichung ergibt, die sich aus dem ersten Abweichungssignal A und dem bereits genannten zweiten Abweichungssignal M zusammensetzt. Letzteres entspricht dem erwähnten multiplikativen Fehler.

Bei der Ermittlung des ersten Abweichungssignals A und des zweiten Abweichungssignals M müssen folgende Randbedingungen eingehalten werden:

Die mechanische Reibung der Bauteile und Baugruppen der Einspritzpumpe sollte vernachlässigbar klein sein, also etwa im Bereich um den Wert "0" liegen. Dazu ist eine Mindestdrehzahl der Brennkraftmaschine anzustreben, das heißt, die Drehzahl n sollte größer als eine Grenzdrehzahl n_{Grenz} sein.

Auch die Einspritzmenge sollte einen Mindestwert überschreiten, das heißt, sie ist größer als ein Einspritzmengengrenzwert Q_{Grenz}.

Der Mittelwert der Regelabweichung sollte im Bereich von ungefähr "0" liegen und das für eine Zeit ≧ 10 Sekunden, das heißt, es ist ein stationärer Zustand anzustreben.

Unter diesen Voraussetzungen lassen sich Mittelwerte für das erste und das zweite Abweichungssignal A, M nach den Gleichungen 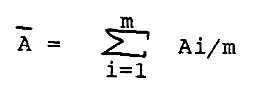 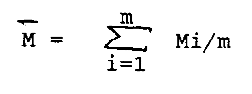
ermitteln.

Abweichungs-Zwischenwerte, das heißt, also Werte die zwischen den beiden Anschlagpunkten des Regelkreises liegen, können vorzugsweise durch Interpolation, insbesondere lineare Interpolation ermittelt werden, so daß für den jeweils vorliegenden Regler-Betriebspunkt die Abweichungen bestimmt werden können.

Zur Korrektur dieser Abweichungen werden das erste Abweichungssignal A und das zweite Abweichungssignal M entsprechend dem jeweils vorliegenden Regler-Betriebspunkt dem Regelsystem zugeführt. Dies erfolgt für das erste Abweichungssignal A, das einen additiven Fehler repräsentiert, durch Einspeisung in die Summationsstelle 10. Zum Ausgleich des multiplikativen Fehlers wird eine multiplikative Einspeisung des zweiten Abweichungssignals M vorgenommen, indem dieses -wie bereits beschriebender Multiplikationsstelle 15 als Eingangsgröße zugeführt wird.

Durch die erfindungsgemäßen Maßnahmen läßt sich somit im gesteuerten (Vorsteuerung 8) und geregelten (PI-Regler 4) Fall eine große Dynamik erzielen, wobei eine Korrektur der sich aufgrund von Toleranzen einstellenden Fehler vorgenommen ist.

## Patentansprüche

1. Verfahren zum Betreiben eines Regelsystems (1) mit einem Regler (2) und einer Regelstrecke (3), insbesondere für die Kraftstoffeinspritzung einer Brennkraftmaschine, bei dem beim Auftreten von Abweichungen eine Fehlerkorrektur erfolgt und bei dem parallel zum Regler (2) ein Steuerglied (7) als Vorsteuerung betrieben wird, dadurch gekennzeichnet, daß ein erstes Abweichungssignal (A) in der Mitte eines Regelbereichs und ein zweites Abweichungssignal (M) im Bereich eines Endpunktes des Regelbereichs ermittelt wird und daß mittels des ersten Abweichungssignals eine additive Korrektur und mittels des zweiten Abweichungssignals eine multiplikative Korrektur des Eingangssignals (17) der Regelstrecke (3) durchführbar ist.

2. Verfahren nach Anspruch 1, dadurch gekennzeichnet, daß der Regler (2) ein PI-Regler (4) ist.

3. Verfahren nach einem der vorhergehenden Ansprüche, dadurch gekennzeichnet, daß das erste Abweichungssignal (A) auf eine Summationsstelle (10) am Ausgang (9) der Vorsteuerung (8) geführt wird und/oder daß das zweite Abweichungssignal (M) auf eine Multiplikationsstelle (15) am Eingang der Regelstrecke (3) des Regelsystems (1) geführt wird.

4. Verfahren nach einem der vorhergehenden Ansprüche, dadurch gekennzeichnet, daß die zwischen den Endpunkten des Regelkreises liegenden Abweichungszwischenwerte entsprechend den jeweils vorliegenden Reglerbetriebspunkt durch Interpolation, insbesondere lineare Interpolation, ermittelt und dem Regelsystem (1) zugeführt werden.

5. Verfahren nach einem der vorhergehenden Ansprüche, dadurch gekennzeichnet, daß die Verstärkung der als P-Glied ausgebildeten Vorsteuerung (8) der umgekehrt mittleren Streckenverstärkung entspricht.

6. Verfahren nach einem der Ansprüche 2 bis 5, dadurch gekennzeichnet, daß der PI-Regler (4) als Eingangssignal das Ausgangssignal eines Summenpunktes (6) erhält, auf den mit positiven Vorzeichen ein Sollsignal (SB_{Soll}) und mit negativen Vorzeichen ein vom Ausgang (18) der Regelstrecke kommendes Istwert geführt ist, wobei es sich bei dem Sollsignal (SB_{Soll}) um ein Einspritzbeginnsollwert und bei dem Istsignal (SB_{Ist}) um ein Einspritzbeginnistwert einer Kraftstoffeinspritzung einer Brennkraftmaschine, vorzugsweise einer selbstzündenden Brennkraftmaschine handelt.

7. Verfahren nach Anspruch 6, dadurch gekennzeichnet, daß die Vorsteuerung (8) als Eingangssignal das Sollsignal (SB_{Soll}) erhält.

8. Verfahren nach einem der Ansprüche 2 bis 7, dadurch gekennzeichnet, daß der Ausgang (9) der Vorsteuerung (8) und der Ausgang des PI-Reglers jeweils mit positiven Vorzeichen einem Summationspunkt als Eingangsgröße zugeleitet werden.

9. Verfahren nach einem der vorhergehenden Ansprüche, dadurch gekennzeichnet, daß die Reglerstrecke (3) von der Einspritzpumpe einer Brennkraftmaschine gebildet ist.

10. Verfahren nach einem der Ansprüche 7 bis 9, dadurch gekennzeichnet, daß das Sollsignal (SB_{Soll}) ein Kennfeldwert ist, der aus Betriebsparametern der Brennkraftmaschine gebildet wird.

## Claims

1. Method for operating a control system (1), having a controller (2) and a controlled system (3), in particular for the fuel injection of an internal combustion engine, in which an error correction takes place when deviations occur and in which a control element (7) is operated as pilot control parallel to the controller (2), characterized in that a first deviation signal (A) is determined in the centre of a control range and a second deviation signal (M) is determined in the region of an end point of the control range, and in that an additive correction of the input signal (17) of the controlled system (3) can be carried out by means of the first deviation signal and a multiplicative correction of the input signal (17) of the controlled system (3) can be carried out by means of the second deviation signal.

2. Method according to Claim 1, characterized in that the controller (2) is a PI controller (4).

3. Method according to one of the preceding claims, characterized in that the first deviation signal (A) is fed to a summation point (10) at the output (9) of the pilot control (8) and/or in that the second deviation signal (M) is fed to a multiplication point (15) at the input of the controlled system (3) of the control system (1).

4. Method according to one of the preceding claims, characterized in that the intermediate deviation values lying between the end points of the control circuit are determined in accordance with the respectively present controller operating point by interpolation, in particular linear interpolation, and are fed to the control system (1).

5. Method according to one of the preceding claims, characterized in that the amplification of the pilot control (8) which is constructed as a P element corresponds to the inverse average amplification of the controlled system.

6. Method according to one of Claims 2 to 5, characterized in that the PI controller (4) receives as input signal the output signal of a sum point (6) to which a desired value signal (SB_{des}) is fed with a positive sign and an actual value which comes from the output (18) of the controlled system is fed with a negative sign, the desired value signal (SB_{des}) being a desired value for the start of injection and the actual signal (SB_{act}) being an actual value for the start of injection of a fuel injection system of an internal combustion engine, preferably of an internal combustion engine with auto-ignition.

7. Method according to Claim 6, characterized in that the pilot control (8) receives as input signal the desired value signal (SB_{des}).

8. Method according to one of Claims 2 to 7, characterized in that the output (9) of the pilot control (8) and the output of the PI controller are each fed with positive signs to a summation point as input parameters.

9. Method according to one of the preceding claims, characterized in that the controlled system (3) is formed by the injection pump of an internal combustion engine.

10. Method according to one of Claims 7 to 9, characterized in that the desired value signal (SB_{des}) is a characteristic diagram value which is formed from operating parameters of the internal combustion engine.

## Revendications

1. Procédé pour faire fonctionner un système de réglage (1) avec un régulateur (2) et un trajet de réglage (3), en particulier pour l'injection de carburant dans un moteur à combustion interne, dans le cas duquel a lieu une correction d'erreur lors de l'apparition d'écarts et dans le cas duquel on fait fonctionner, en parallèle au régulateur (2), un organe de commande (7) en tant que précommande, procédé caractérisé en ce que l'on détecte un premier signal d'écart (A) au milieu d'une zone de réglage et un deuxième signal d'écart (M) dans la zone d'un point terminal de la zone de réglage, et en ce qu'au moyen du premier signal d'écart on peut effectuer une correction additive, et au moyen du second signal d'écart une correction multiplicative du signal d'entrée (17) du trajet de réglage (3).

2. Procédé selon la revendication 1, caractérisé en ce que le régulateur (2) est un régulateur PI (4) (proportionnel et par intégration).

3. Procédé selon l'une des revendications précédentes, caractérisé en ce que le premier signal d'écart (A) est amené à un point de sommation (10) à la sortie (9) de la précommande (8) et/ou en ce que le second signal d'écart (M) est amené à un point de multiplication (15) à l'entrée du trajet de réglage (3) du système de réglage (1).

4. Procédé selon l'une des revendications précédentes, caractérisé en ce qu'on détecte par interpolation les valeurs intermédiaires d'écart qui se trouvent entre les points terminaux du circuit de réglage qui correspondent au point de fonctionnement existant du régulateur, en particulier par interpolation linéaire, et on les envoie au système de réglage (1).

5. Procédé selon l'une des revendications précédentes, caractérisé en ce que l'amplification de la précommande (8) constituée sous la forme d'un organe P (proportionnel), correspond à l'amplification inversement moyenne du trajet de réglage.

6. Procédé selon l'une des revendications 2 à 5, caractérisé en ce que le régulateur PI (4) (proportionnel et par intégration) reçoit en tant que signal d'entrée le signal de sortie d'un point de sommation (6) auquel est amené avec un signe positif un signal de consigne (SB_{cons}) avec un signe négatif une valeur réelle provenant de la sortie (18) du trajet de réglage, en notant qu'il s'agit dans le cas du signal de consigne (SB_{cons}) la valeur de consigne du début de l'injection et, dans le cas du signal réel (SB_{réel}), de la valeur réelle du début de l'injection de carburant dans un moteur à combustion interne.

7. Procédé selon la revendication 6, caractérisé en ce que la précommande (8) reçoit en tant que signal d'entrée le signal de consigne (SB_{cons}).

8. Procédé selon l'une des revendications 2 à 7, caractérisé en ce que la sortie (9) de la précommande (8) et la sortie du régulateur PI sont envoyées respectivement avec un signe positif à un point de sommation en tant que grandeurs d'entrée.

9. Procédé selon l'une des revendications précédentes, caractérisé en ce que le trajet de réglage (3) est constitué par la pompe d'injection d'un moteur à combustion interne.

10. Procédé selon l'une des revendications 7 à 9, caractérisé en ce que le signal de consigne (SB_{cons}) est une valeur d'un champ caractéristique qui est formée à partir des paramètres de fonctionnement du moteur à combustion interne.
